Europäisches Patentamt

European Patent Office

Office européen des brevets

(19)

(11) Publication number: **0 053 447**
**B1**

(12) **EUROPEAN PATENT SPECIFICATION**

(45) Date of publication of patent specification: **11.03.87**

(21) Application number: **81305363.4**

(22) Date of filing: **12.11.81**

(51) Int. Cl.⁴: **G 04 F 1/00, F 23 N 5/20,
F 23 N 5/24**

(54) **Fail safe digital timer.**

(30) Priority: **28.11.80 US 210967**

(43) Date of publication of application:
**09.06.82 Bulletin 82/23**

(45) Publication of the grant of the patent:
**11.03.87 Bulletin 87/11**

(84) Designated Contracting States:
**CH DE FR GB IT LI**

(56) References cited:
**GB-A- 978 020
US-A-3 324 927
US-A-3 798 558
US-A-4 239 478
US-A-4 255 809**

(73) Proprietor: **HONEYWELL INC.**
**Honeywell Plaza**
**Minneapolis Minnesota 55408 (US)**

(72) Inventor: **Bohan, John E., Jr.**
**4820 Fremont Avenue South**
**Minneapolis Minnesota 55409 (US)**

(74) Representative: **Frohwitter, Bernhard, Dipl.-Ing.
et al
Bardehle-Pagenberg-Dost-Altenburg & Partner
Patent- und Rechtsanwälte Galileiplatz 1
Postfach 86 06 20
8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

## Background of the Invention

Digital timers have been used extensively with all types of systems and devices ranging from household appliances to large size computing systems. Digital timers typically operate from a block means driven directly by the line voltage, or can be operated from crystal controlled oscillators that are widely used in devices such as microprocessor controlled equipment. Most of the equipment that utilize digital timers do not involve safety functions, or are large enough to provide backup timers to insure proper operation. In certain types of control equipment, the redundant use of timers or backup timers can not be tolerated from a cost point of view. Certain types of this equipment, however, must be operated in a fail safe manner because of the nature of the equipment. This is particularly true of burner control equipment for programming the operation of burners that supply heat to boilers or furnaces. The failure of the timer in this type of equipment can lead to a catastrophic type of failure of explosion that has the potential of not only monetary damage, but the possible loss of life.

Most of the equipment used for timing in burner control equipment in the past has relied on a motor driven mechanism utilizing a small clock type timer that has proven to be reliable through many years of use. The clock type timer normally drives a series of cams which operate switches at appropriate time intervals so that the program contained within the burner equipment will function as programmed. This type of equipment is being rapidly replaced by digital equipment, and particularly digital equipment that includes a microprocessor for executing the control program. The operation of this new type of equipment relies on a digital timer and the failure of the digital timer clearly would create a potential failure of an unsafe nature.

US patent 4 239 478 (Tanka and Nakagawa: Hitachi) whose content was published on 7.4.1979 in the JP—A—54 044 236 shows an example of burner control equipment utilizing a digital timer. Specifically, there are two timers, a control timer and a safety timer, which determine two successive timer intervals in the start-up sequence of a burner (purge period and ignition period respectively). To check that these timers both work properly, a safety flip-flop is provided. The safety timer is normally held at its full count. The operating signal resets this counter; that resetting sets the safety flip-flop; and that in turn resets the control timer, to allow the timing sequence to begin. Thus a failure of the safety timer, so that it will not reset properly, means that the timing sequence cannot be started. However, it is evident that this arrangement provides protection against only certain types of fault; in particular, it provides no protection against a failure of a counter during operation, or a failure which results in the counter failing to count properly but instead sticking on some intermediate count, or cycling before it should.

Accordingly the present invention provides control apparatus for fuel burner control, and a burner equipped therewith, the apparatus comprising a clock source feeding a train of clock pulses to a counter, and decoding circuitry for decoding a plurality of intervals which control at least the stages of burner operation of prepurge and of trial for ignition, characterized by a second counter fed by a complementary train of clock pulses, so that its count follows that of the first counter with a half cycle delay, and a comparator fed by both counters and feeding the decoding circuitry such that the decoding circuitry outputs alternate at the clock frequency, the fuel burner responding only to such alternating signals.

An embodiment of the invention will now be described by way of example only with reference to the accompanying drawings, in which:—

Figure 1 is a block diagram of a burner control system utilizing a fail safe digital timer according to the present invention, and

Figure 2 shows the content of one of the blocks of Figure 1.

Referring to the drawings, the burner control system includes a fail safe digital timer 10 connected by a pair of conductors 11 and 12 to a portion of the circuit that has been designated as the load 13. The load 13 is part of a flame safeguard system to show the application of the fail safe timer 10 in a typical system.

The fail safe timer 10 includes a clock 14 that includes two portions 15 and 16. The portion 15 provides a continuous frequency signal as produced by a conventional 60 hertz line supply or could be produced by another type of apparatus such as a crystal controlled oscillator. The other portion of the clock 14 is an output portion providing a clock pulse $\overline{C}$ on conductor 20 and a complementary clock pulse C on conductor 21. The complementary clock pulse is generated by connecting the clock pulse on conductor 20 through a conventional inverter 22 thereby inverting the clock pulse.

The clock pulses on conductor 20 are connected to a first counter 23, while the complementary clock pulses on conductor 21 are connected to a second counter 24. It should be understood that the terms first and second counters are interchangeable, and if this interchange is made then the clock pulses and complementary clock pulses would be interchanged also. The counters 23 and 24 typically would be binary counters of conventional design having the number of bits that is compatible with the time interval for which the fail safe digital timer 10 is to be provided. The counter 23 has an output at 25 that has been shown as a single line, the line really is a group of conductors that is compatible with the number of bits of the binary counter 23. The counter 24 has an output conductor 27 that has a number of conductors compatible with the counter 24. The two outputs 25 and 27 are connected to a comparator 30 which compares the binary outputs or codes from the two counters 23 and 24. The comparator 30 has an output 31 that has been identified as the Q output and this is connected to the conductor 11.

The operation of the fail safe digital timer 10 will now be discussed before the remainder of the circuit is described. The clock 14 provides a continuous source of clock pulses on conductor 20 and complementary clock pulses on conductor 21. The two binary counters 23 and 24 receive their counts from the clock pulses and the complementary clock pulses respectively and each of the counters will count up and provide a count output on outputs 25 and 27. The outputs 25 and 27 will each have similar output counts, but counts that are displaced in time because of the nature of the clock pulses and the complementary clock pulses being fed to the two binary counter means 23 and 24. The comparator 30 compares the similar but displaced outputs 25 and 27, and if the two counts are present in the proper form, the comparator 30 will have an output Q at 31 which is a repetitive output signal. The repetitive output signal will be a series of pulses at a frequency equal to the frequency of the output of the clock 14.

In the event that there is a component or functional failure in the counter 23, the counter 24, or the comparator 30, the continuous series of pulses Q on conductor 11 will change to a constant output at either a high or low level, or will be at a frequency different than the frequency of the clock 14. The load 13 is responsive to the appropriate series of pulses or counts on conductor 11 and therefore any failure in the timer 10 would cause the out-put 13 to become deenergized which is a safe condition. The manner in which this is accomplished will be described in connection with a consideration of the output pulses or signals that are present on conductors 11 and 12 to the load 13.

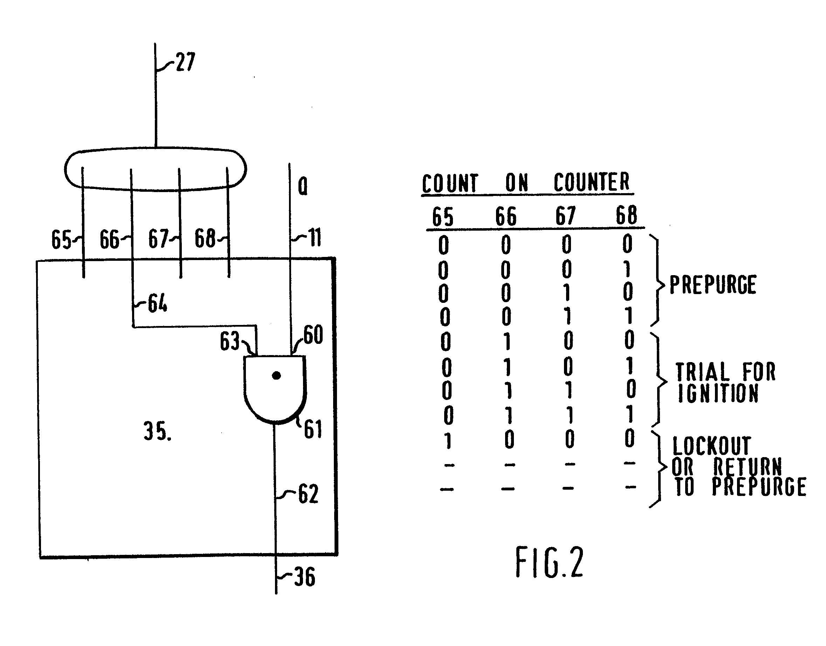

The conductors 11 and 12 are connected to a logic unit 35 that is responsive only to a specific time interval from the fail safe digital timer 10. The manner in which this is accomplished will be discussed in connection with Figure 2. The logic unit 35 must receive a continuous series of pulses on conductor 11 along with the output 27 of the second counter 24. As long as a series of properly generated repetitive output signal pulses occur on the conductor 11, the logic unit 35 responds to the output of the second counter 24 on conductor 12. When the logic unit 35 senses the presence of the proper repetitive output signal on conductor 11, and the proper count on the conductor 12, the logic unit 35 has an output on a conductor 36 that shifts from a logic 0 to a continuous series of logic 1's. The output 36 is connected to an OR gate 40 that has an output at 41 and a further input at 42. The input 42 is connected by conductor 43 to a flame sensor 44 which can be any type of flame detecting apparatus that has a pulsed output when flame is sensed, and where the pulsed output is at a frequency corresponding to the frequency of the clock 14. The flame sensor 44 has a logic 0 on conductor 43 when no flame is present and a continuous series of logic 1's on conductor 43 when flame is present.

The OR gate 40 supplies a pulse through a capacitor 45 to a silicon controlled rectifier 46 that is connected in series with a relay coil 47 to a fuse 51 and a source of power 50. The relay coil 47 is connected at 52 to a contact 53 which can complete a circuit to the conductor 54 and a fuel valve 55. The operation of the relay 47, whenever the silicon controlled rectifier 46 is gated into conduction, closes the switch 53 and supplies power on the conductor 54 to the fuel valve 55 from the power source 50 to a common ground 56. Since the comparator 30 puts out a repetitive series of pulses during correct operation the output 41 of the OR gate 40 is a series of pulses when a series of pulses is supplied on conductor 36 or on the conductor 43. These logic pulses gate the silicon controlled rectifier 46 each time a positive potential is applied on the source 50 thereby effectively keeping the relay 47 energized whenever a pulse is supplied to either of the inputs of the OR gate 40. This pulse train is coupled through an isolating capacitor 45 to effectively keep the fuel valve 55 energized as long as the timer 10 supplies a count to the logic unit 35 that indicates that it is a proper time for the fuel valve 56 to be open, or whenever the flame sensor 44 senses the existence of a flame. The application of the above described burner control system, in one particular operating mode, will be discussed in connection with Figure 2.

In Figure 2 the logic unit 35 has been shown in more detail. The conductor 11 which supplies the Q pulse or the repetitive output signal from the comparator 30 is shown as being connected at 60 to an AND gate 61 that has an output conductor 62. The AND gate 61 further has an input 63 that is connected by a conductor 64 to a conductor designated as conductor 66 or the third conductor of the multiple conductors being supplied from the second counter 24. The other conductors shown are conductors 65, 67 and 68. These conductors are not shown connected to any logic within the logic unit 35 as they provide a different timing function than the specific timing function that will be illustrated in connection with Figure 2. In connection with the description of Figure 2, a truth table or logic table for the counts on the counter are disclosed for a timing function for the trial for ignition portion of a fuel burner system. The trial for ignition portion of such a fuel burner system is the time when fuel and ignition are supplied to the burner for a set period of time in which the burner tries to ignite the output of fuel and properly sense the flame by means of the flame sensor 44. If a successful trial for ignition occurs, flame is established and the flame sensor 44 functions after the set time interval to keep the fuel valve 55 energized. This means that the output of the flame sensor 44 would be a continuous series of logic 1's on the conductor 43. In order to provide the time interval for the trial for ignition, the digital count on the conductor 66 at in-put 63 of the AND gate 61 must be a digital 1. This is shown in the second column of truth table shown. in Figure 2.

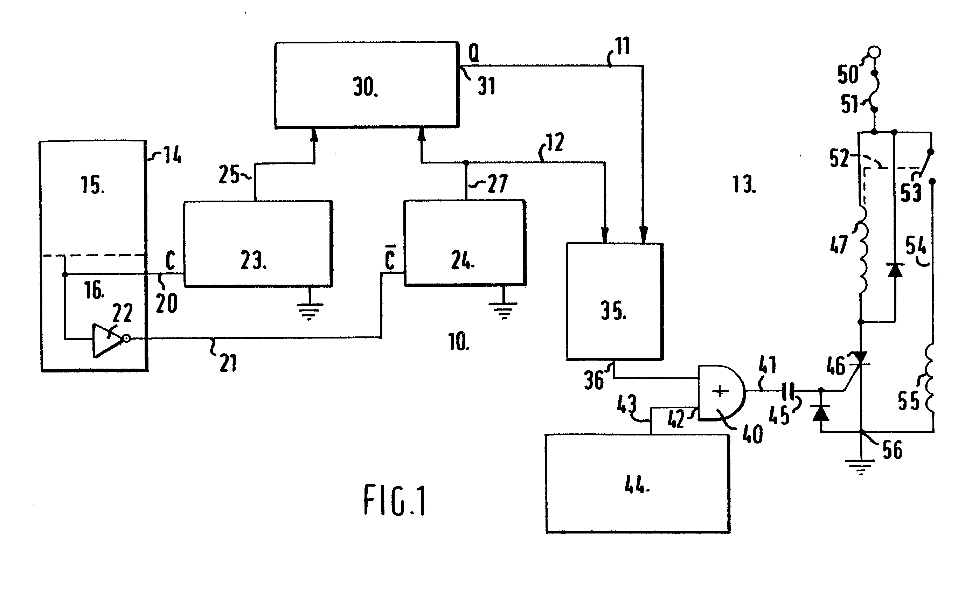

In operation, when the fail safe timer 10 reaches the count where the trial for ignition should occur, the count from the counter 24 on the group of conductors or output 27 has a logic 1 on the conductor 66 thereby providing a continuous series of logic 1's at the output conductor 62 of the AND gate 61. It will be noted from the table in Figure 2 that a logic 1 is present at the terminal 63 of the AND gate 61 only during the trial for ignition portion of the timing cycle. This will allow the output 36 of the logic unit 35 to supply a continuous series of logic 1's to the OR gate 40 in Figure 1 thereby causing the fuel valve 55 to be opened for the trial for ignition period. If flame is established during this trial for ignition portion of the time, the flame sensor 44 senses this event. The flame sensor 44 then provides a continuous series of logic 1's on conductor 43 to the OR gate 40 so that when the trial for ignition time period ends, the fuel valve 55 is kept open under the control of the flame sensor 44.

The logic unit 35 of Figure 2 is a highly simplified disclosure of a typical timing function. It is quite obvious that the digital logic contained in the logic unit 35 can be designed for any type of programmed logic for the load 13.

**Claims**

1. Control apparatus for fuel burner control, comprising a clock source (15) feeding a train of clock pulses (C) to a counter (24), and decoding circuitry (35) for decoding a plurality of intervals which control at least the stages of burner operation of prepurge and of trial for ignition, characterized by a second counter (23) fed by a complementary train of clock pulses ($\overline{C}$), so that its count follows that of the first counter (24) with a half cycle delay, and a comparator (30) fed by both counters (23, 24) and feeding the decoding circuitry (35) such that the decoding circuitry outputs alternate at the clock frequency, the fuel burner responding only to such alternating signals.

2. Burner equipped with a control apparatus according to Claim 1, characterized in that the burner includes a flame sensor (44) having a digital logic output which is compared with an output from the decoding circuitry (35) with the compared outputs connected to operate the burner; and a fuel control assembly (45 to 56) supplying fuel to the fuel burner controlled by said compared outputs and monitored by the flame sensor.

3. Burner according to Claim 2, characterized in that a load (13) associated with the control apparatus includes an OR gate (40) combining the flame sensor (44) digital logic output and the decoding circuitry (35) output to control the fuel control assembly (45 to 56).

4. Burner according to Claim 2 or 3, characterized in that the fuel control assembly (45 to 56) includes a solid state switch (46) to energize electromagnetically operated fuel control means.

5. Burner according to Claim 4, characterized in that the solid state switch (46) is a silicon controlled rectifier and the electromagnetically operated fuel control means includes a relay (47).

**Patentansprüche**

1. Steuervorrichtung für einen Brennstoffbrenner mit einer Taktquelle (15), die eine Folge von Taktimpulsen (C) einem Zähler (24) zuführt, und einer Dekodierungsschaltungsanordnung (35) zum dekodieren einer Vielzahl von Intervallen, die mindestens die Brennerbetriebsstufen der Vorreinigung und des Zündversuches steuert, gekennzeichnet durch einen zweiten Zähler (23), dem eine komplementäre Folge von Taktimpulsen ($\overline{C}$) zugeführt wird, so daß sein Zählen dem des ersten Zählers (24) mit einem halben Zyklus Verspätung folgt, und einen Komparator (30), der durch beide Zähler (23, 24) versorgt wird und die Dekodierungsschaltungsanordnung (35) so versorgt, daß die Dekodierungsschaltungsanordnung alternierend mit der Taktfrequenz ausgibt, wobei der Brennstoffbrenner nur auf solche alternierenden Signale reagiert.

2. Brenner, der mit einer Steuervorrichtung nach Anspruch 1 ausgerüstet ist, dadurch gekennzeichnet, daß der Brenner einen Flammensensor (44), der einen digitalen Logikausgang hat, der mit einem Ausgang von der Dekodierungsschaltungsanordnung (35) verglichen wird, wobei die verglichenen Ausgänge verbunden sind, um den Brenner zu betreiben, und eine Brennstoffsteueranordnung (45—56) aufweist, die Brennstoff dem Brennstoffbrenner, der durch die verglichenen Ausgänge gesteuert und durch den Flammensensor überwacht wird, zuführt.

3. Brenner nach Anspruch 2, dadurch gekennzeichnet, daß eine Last (13), die der Steuervorrichtung zugeordnet ist, ein ODER-Gatter (40) aufweist, das den digitalen Logikausgang des Flammensensors (44) und den Ausgang der Dekodierungsschaltungsanordnung (35) kombiniert, um die Brennstoffsteueranordnung (45—56) zusteuern.

4. Brenner nach Anspruch 2 oder 3, dadurch gekennzeichnet, daß die Brennstoffsteueranordnung (45—56) einen Festkörperschalter (46) aufweist, um eine elektromagnetisch betriebenen Brennstoffsteuereinrichtung mit Energie zu versorgen.

5. Brenner nach Anspruch 4, dadurch gekennzeichnet, daß der Festkörperschalter (46) ein siliziumgesteuerter Gleichrichter ist und die elektromagnetisch betriebenen Brennstoffsteuereinrichtung ein Relais (47) aufweist.

**Revendications**

1. Appareil de commande pour la régulation d'un brûleur de carburant, comprenant une source d'horloge (15) fournissant un train d'impulsions d'horloge (C) à un compteur (24) et un circuit de décodage (35) pour décoder une pluralité d'intervalles qui commandent au moins les étapes de fonctionnement du brûleur de prépurge et d'essai d'allumage, caractérisé par un second compteur (23) alimenté par un train complémentaire d'impulsions d'horloge (C̄) de sorte que son comptage suit celui du premier compteur (24) avec un retard d'une alternance, et un comparateur (30) alimenté par les deux compteurs (23, 24) et alimentant le circuit de décodage (35) de sorte que les sorties du circuit de décodage alternent à la fréquence d'horloge, le brûleur de carburant agissant seulement en réponse à de tels signaux alternés.

2. Brûleur équipé d'un appareil de commande selon la revendication 1, caractérisé en ce que le brûleur comprend un détecteur de flamme (44) ayant une sortie numérique logique qui est comparée à la sortie du circuit de décodage (35), les sorties comparées étant connectées pour faire fonctionner le brûleur; et un ensemble de régulation de carburant (45 à 56) fournissant du carburant à un brûleur de carburant commandé par lesdites sorties comparées et surveillées par le détecteur de flamme.

3. Brûleur selon la revendication 2, caractérisé en ce qu'une charge (13) associée à l'appareil de commande comprend une porte OU (40) combinant la sortie logique numérique du détecteur de flamme (44) et la sortie du circuit de décodage (35) pour commander l'ensemble de régulation de carburant (45 à 56).

4. Brûleur selon l'une des revendications 2 ou 3, caractérisé en ce que l'ensemble de régulation de carburant (45 à 56) comprend un commutateur à état solide (46) pour alimenter un moyen de commande de carburant actionné électromagnétiquement.

5. Brûleur selon la revendication 4, caractérisé en ce que le commutateur à état solide (46) est un thyristor et en ce que le moyen de commande de carburant actionné électromagnétiquement comprend un relais (47).

FIG.1

0 053 447

| COUNT | ON | COUNTER | | |
|---|---|---|---|---|
| 65 | 66 | 67 | 68 | |
| 0 | 0 | 0 | 0 | ⎫ |
| 0 | 0 | 0 | 1 | ⎬ PREPURGE |
| 0 | 0 | 1 | 0 | |
| 0 | 0 | 1 | 1 | ⎭ |
| 0 | 1 | 0 | 0 | ⎫ |
| 0 | 1 | 0 | 1 | ⎬ TRIAL FOR |
| 0 | 1 | 1 | 0 | IGNITION |
| 0 | 1 | 1 | 1 | ⎭ |
| 1 | 0 | 0 | 0 | ⎫ LOCKOUT |
| – | – | – | – | ⎬ OR RETURN |
| – | – | – | – | ⎭ TO PREPURGE |

FIG.2